# FASCICULE DE BREVET EUROPEEN

(11) **EP 3 046 178 B1**
(45) Date de publication et mention de la délivrance du brevet: **28.11.2018**
(21) Numéro de dépôt: 16150679.5
(22) Date de dépôt: 08.01.2016
(51) Int. Cl.: H01M 10/653, H01M 10/6568, H01M 10/617, H01M 10/655

(54) **BATTERIE DOTEE D'UN DISPOSITIF DE REGULATION THERMIQUE D ELEMENTS ELECTROCHIMIQUES, PROCEDE DE FABRICATION ASSOCIE**
BATTERIE, DIE MIT EINER VORRICHTUNG ZUR WÄRMEREGULIERUNG DER ELEKTROCHEMISCHEN ELEMENTE AUSGESTATTET IST, UND ENTSPRECHENDES HERSTELLUNGSVERFAHREN
BATTERY PROVIDED WITH A DEVICE FOR THERMAL REGULATION OF ELECTROCHEMICAL ELEMENTS, ASSOCIATED MANUFACTURING METHOD

(30) Priorité: 15.01.2015 FR 1550330
(43) Date de publication de la demande: 20.07.2016
(73) Titulaire: SAFT, 93170 Bagnolet (FR)
(72) Inventeur: BOBINET, Julien, 33560 Sainte Eulalie (FR); POUYAU, Laurent, 33290 Blanquefort (FR); BERTIN, Mathieu, 33140 Villenave d'Ornon (FR); FORGET, Guillaume, 33400 Tallence (FR)
(74) Mandataire: Hirsch & Associés

(56) Documents cités:
- EP-A1- 0 681 156
- EP-A1- 2 051 314
- WO-A1-2010/109293
- WO-A2-01/75989
- CN-A- 103 996 888
- DE-A1- 10 352 046

## Description

### DOMAINE TECHNIQUE

L'invention a pour objet une batterie comprenant un dispositif destiné à réguler de manière homogène la température d'éléments électrochimiques. Ce dispositif permet notamment un refroidissement homogène des éléments électrochimiques en ce sens que chacun d'eux est maintenu à une température moyenne sensiblement identique. L'invention a également pour objet un procédé de fabrication d'une batterie comprenant une étape de montage des éléments électrochimiques dans le dispositif.

### ETAT DE LA TECHNIQUE

Une batterie est classiquement composée d'un ou de plusieurs éléments électrochimiques. Un élément électrochimique est généralement conçu pour fonctionner dans une plage de température dite nominale. L'utilisation d'un élément électrochimique hors de cette plage de température peut entraîner une limitation de ses performances ou son vieillissement prématuré. Par exemple, une charge menée à une température trop basse peut conduire à un élément électrochimique insuffisamment chargé. Une charge ou une décharge menée à une température excessive peuvent conduire à une dégradation rapide des composants de la batterie. Même utilisé dans la plage nominale de température, un élément électrochimique fonctionnant à forte puissance sur une longue période génère une grande quantité de chaleur. Si cette chaleur n'est pas suffisamment dissipée par l'air ambiant, on peut observer un emballement thermique de l'élément électrochimique, voire sa destruction.

Il est donc nécessaire de prévoir un dispositif de régulation thermique qui permette soit de réchauffer soit de refroidir les éléments électrochimiques.

Les documents WO 02/07249, JP 11-054157, US-B-6 228 524 et US-B-5 624 003 décrivent des dispositifs de régulation de température constitués d'une chemise d'eau rigide ("water jacket") qui comprend une enveloppe rigide dans laquelle un liquide caloporteur circule. Cette enveloppe est placée au contact de la paroi des éléments de la batterie dont on veut réguler la température. La circulation du liquide caloporteur est assurée par une pompe. La chemise d'eau est en général connectée à un bain thermostatique qui permet selon les cas de réchauffer ou de refroidir les éléments.

Le document EP-A-1 261 065 décrit une chemise d'eau en matière plastique flexible. Cette chemise flexible s'adapte précisément au contour des éléments de la batterie. Les échanges thermiques sont ainsi favorisés. Cependant, ce dispositif est difficile à mettre en application sur le plan industriel en raison du long cheminement de la chemise d'eau autour des éléments. D'autre part, les éléments situés aux deux extrémités du dispositif de refroidissement peuvent avoir des températures différentes en raison du réchauffement (ou du refroidissement) du liquide caloporteur par passage au contact des éléments électrochimiques. Cette différence de température est d'autant plus marquée que la batterie comporte un nombre élevé d'éléments. De plus, ce type de dispositif permet difficilement de maintenir la température des éléments électrochimiques en dessous de 55°C en utilisant une température de liquide caloporteur en entrée de 25°C. Les échanges thermiques entre le liquide caloporteur et les éléments électrochimiques n'ont lieu, de plus, que sur 20% de la surface latérale de ceux-ci.

De plus, le document CN-A-103 996 888 décrit un dispositif de refroidissement de liquide du type nid d'abeille pour batterie au lithium. Le document WO-A2-01/75989 a trait un module pour retenir et refroidir, par une configuration à multi-passage de fluide, un groupe de cellules électrochimiques alignées.

Ensuite, le document EP-A1-0 681 156 divulgue un échangeur thermique permettant de refroidir un objet grâce à un fluide mû par une pompe entre une chambre haute et une chambre basse. Le document WO-A1-2010/109293 concerne une structure pour l'ajustement de la température d'un appareil de stockage d'électricité ayant une pluralité d'éléments de stockage d'électricité.

Par ailleurs, le document DE-A1-103 52 046 a trait à une batterie ayant une pluralité de cellules cylindriques de stockage électrochimique disposées à l'intérieur de logements d'un boîtier entre lesquels un liquide de refroidissement s'écoule. Le document EP-A1-2 051 314 décrit un dispositif ayant une cellule de stockage électrique rechargeable et un boîtier dans lequel s'écoule un fluide pour réaliser un échange de chaleur.

Il existe donc un réel besoin pour un dispositif de régulation de température qui résolve les problèmes mentionnés ci-dessus et en particulier un dispositif qui permet:
- un échauffement ou un refroidissement de la totalité de la paroi des éléments de la batterie, afin d'obtenir un échange thermique élevé,
- un échauffement ou un refroidissement équivalent pour chaque élément électrochimique quelle que soit sa position dans le dispositif afin que les éléments électrochimiques admettent un vieillissement le plus homogène possible.

### RESUME DE L'INVENTION

A cet effet, l'invention propose un procédé de fabrication d' une batterie selon la revendication 1, dans lequel les éléments électrochimiques sont montés dans un dispositif de régulation thermique fondé sur une circulation du liquide caloporteur suivant des allers-retours qui permettent d'une part des échanges thermiques entre le liquide caloporteur et la totalité de la paroi des éléments électrochimiques de la batterie, et qui permettent d'autre part des échanges thermiques en moyenne équivalents pour chaque élément électrochimique de la batterie, quelle que soit sa position dans le dispositif.

Plus précisément, l'invention propose une batterie comprenant un dispositif de régulation thermique d'éléments électrochimiques,
- le dispositif comportant un caisson étanche aux liquides comprenant une pluralité de tubes disposés de manière sensiblement parallèle, chacune des extrémités des tubes débouchant à l'extérieur du caisson, n cloisons, n≥1, s'étendant transversalement à la direction définie par l'axe longitudinal des tubes de manière à compartimenter l'espace entourant la pluralité de tubes à l'intérieur du caisson suivant n+1 volumes, le dispositif étant pourvu de moyens permettant d'établir une communication entre deux volumes contigus séparés par une cloison, les moyens de communication associés à une cloison donnée étant disposés de manière distale par rapport aux moyens de communication associés aux cloisons adjacentes, le dispositif étant également pourvu de moyens d'admission d'un liquide caloporteur à l'intérieur du volume défini par la première cloison et de moyens de refoulement dudit liquide à l'extérieur du volume défini par la dernière cloison, les moyens de communication de la première et de la dernière cloison étant disposés respectivement de manière distale par rapport aux moyens d'admission et au moyen de refoulement du liquide caloporteur,
- des éléments électrochimiques étant logés dans les tubes du dispositif de régulation thermique, lesdits éléments électrochimiques étant isolés électriquement vis-à-vis desdits tubes.

Des caractéristiques optionnelles de l'invention, complémentaires ou de substitution, sont énoncées ci-après.

Les tubes peuvent être répartis selon au moins une rangée comprenant au moins deux tubes.

Les moyens permettant d'établir une communication entre deux volumes contigus peuvent être constitués d'un ensemble d'ouvertures pratiquées dans la cloison et/ou d'un ensemble de conduits disposés à l'extérieur du caisson.

La section des tubes peut être circulaire, elliptique ou rectangulaire.

Le caisson et les tubes du dispositif peuvent être en acier ou en aluminium.

Le caisson et les tubes du dispositif peuvent être en élastomère ou en plastique comportant des charges.

La surface intérieure des tubes peut être tout ou partie traitée de manière à être non conductrice sur le plan électrique et/ou hautement conductrice sur le plan thermique et/ou traitée de manière à présenter un revêtement destiné à réduire son coefficient de frottement.

Le dispositif de régulation thermique peut comprendre une seconde pluralité de tubes servant au passage de moyens de fixation dudit dispositif sur un support.

Chaque élément électrochimique peut présenter une surface latérale, un fond et un couvercle, au moins 75% de la surface latérale étant en contact avec le caisson, préférentiellement au moins 90%, encore plus préférentiellement 100%.

L'invention a pour objet un procédé de fabrication d'une batterie comportant une étape de montage des éléments électrochimiques dans les tubes du dispositif de régulation thermique, ladite étape comportant la dilatation des tubes.

Des caractéristiques optionnelles de l'invention, complémentaires ou de substitution, sont énoncées ci-après.

La dilatation des tubes peut être une étape de chauffage du dispositif, ledit dispositif étant en acier ou bien en aluminium

La dilatation des tubes peut être une étape de mise sous vide du dispositif, ledit dispositif étant en élastomère ou en plastique.

### BREVE DESCRIPTION DES FIGURES

La figure 1 est une représentation schématique d'éléments électrochimiques montés dans un dispositif de régulation thermique selon l'invention.
La figure 2 est une représentation schématique d'un dispositif de régulation thermique selon l'invention.
La figure 3 représente une vue éclatée d'un dispositif de régulation thermique selon l'invention.
La figure 4 représente la variation de température des éléments électrochimiques d'une batterie, utilisés au cours de cycles successifs de charge-décharge. Ces éléments sont refroidis par un dispositif de régulation thermique de l'art antérieur.
La figure 5 représente la variation de température des éléments électrochimiques d'une batterie, utilisés au cours de cycles successifs de charge-décharge. Ces éléments sont refroidis par un dispositif de régulation thermique selon l'invention.
La figure 6 représente une vue schématique du principe de l'invention.

### EXPOSE DETAILLE DES MODES DE REALISATION DE L'INVENTION

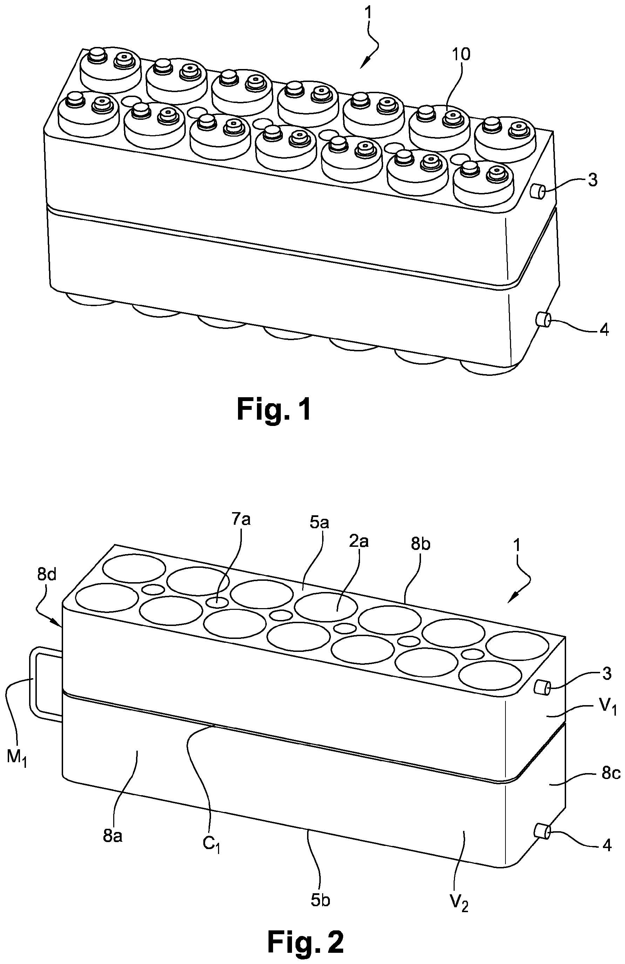

Le dispositif de régulation thermique dans lequel sont montés les éléments électrochimiques va maintenant être décrit en faisant référence aux figures 2, 3 et 6.

Le dispositif comprend un caisson 1 étanche aux liquides. On entend par étanche aux liquides, le fait que ce caisson est adapté pour contenir des liquides sans risque de fuites. Cette caractéristique d'étanchéité est obtenue en choisissant de manière adaptée les matériaux constituant le caisson ainsi que le procédé de fabrication afférent.

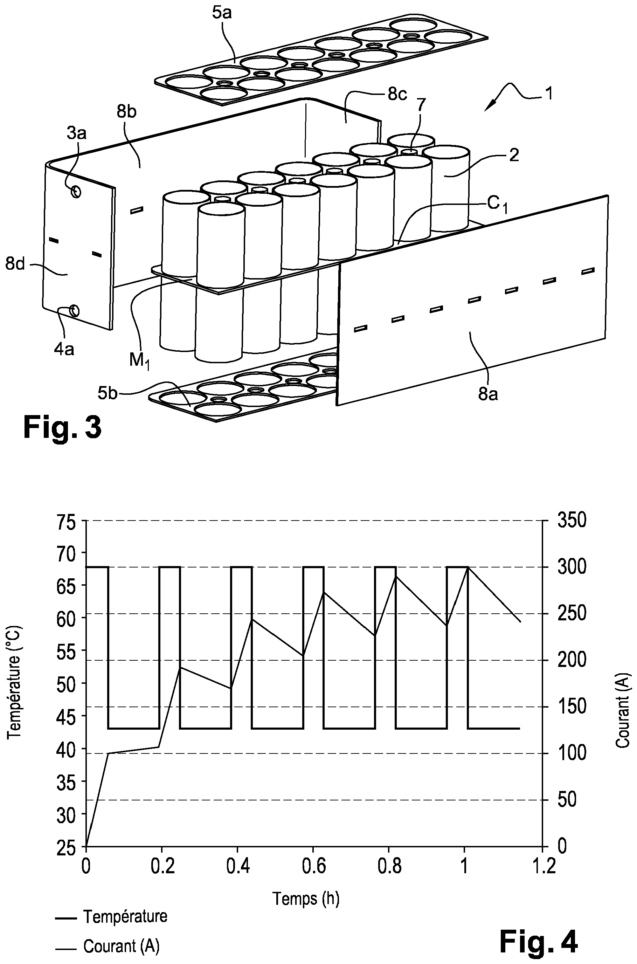

Le caisson renferme une première pluralité de tubes 2, en l'occurrence quatorze, disposés de manière sensiblement parallèle entre eux. Chacune des extrémités de chaque tube débouche à l'extérieur du caisson 1 et définit en son intérieur une enceinte 2a destinée à accueillir les éléments électrochimiques. Bien entendu, afin d'éviter les courts-circuits, les éléments électrochimiques sont isolés électriquement vis-à-vis des tubes. Ces tubes sont de section circulaire dans le mode de réalisation représenté en figures 2 et 3 et adaptés à réguler la température d'éléments électrochimiques cylindriques. Ils peuvent également admettre une section carrée ou bien elliptique dans le cas où les éléments électrochimiques à réguler sont prismatiques ou bien oblongs.

De manière à préserver une certaine compacité du dispositif, les tubes sont préférablement agencés à l'intérieur du caisson suivant des rangées parallèles entre elles, le dispositif comportant au moins une rangée d'au moins deux tubes, en l'occurrence dans l'exemple décrit, deux rangées de sept tubes.

De manière à optimiser la compacité du dispositif, les tubes peuvent être agencés en quinconce.

Le caisson admet une forme globalement parallélépipédique, deux des six faces étant traversées par la pluralité de tubes et les quatre faces restantes étant référencées 8a à 8d.

Tel que prévu dans le mode de réalisation représenté en figures 2 et 3, l'espace entourant les quatorze tubes est compartimenté suivant un premier V1 et un second V2 volumes au moyen d'une cloison C1 qui s'étend transversalement à la direction définie par l'axe longitudinal des tubes.

Bien entendu, il est possible d'envisager d'autres modes de réalisation de l'invention suivant lesquels l'espace entourant une pluralité de p tubes à l'intérieur du caisson 1 peut être compartimenté suivant une série de n cloisons référencées Ck, k variant entre 1 et n. Ces cloisons, sensiblement parallèles entre elles, s'étendent alors transversalement à la direction définie par l'axe longitudinal des tubes de manière à compartimenter ledit espace suivant n+1 volumes Vk.

Tel que prévu dans le mode de réalisation représenté en figures 2 et 3, la cloison C1 est dotée de moyens de communication M1 entre le volume V1 et le volume V2, qui permettent ainsi aux liquides caloporteurs de circuler depuis le volume V1 vers le volume V2. Tel que représenté sur la figure 2, ces moyens de communication M1 consistent en un conduit qui s'étend à l'extérieur du caisson mais qui est raccordé en ses deux extrémités à la paroi 8d, lesdites extrémités communicant pour l'une avec le volume V1 et pour l'autre avec le volume V2. Tel que représenté sur la figure 3, les moyens de communication M1 consistent en une ouverture pratiquée dans la cloison C1. Bien entendu, ces moyens de communication peuvent admettre des configurations multiples et variées.

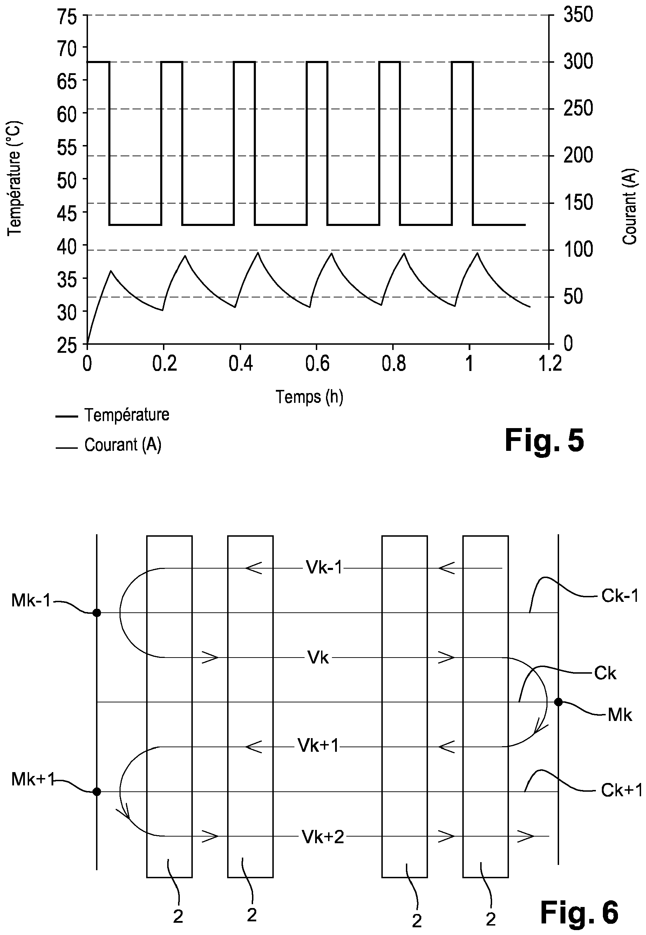

En référence à la figure 6 relative au mode de réalisation dans lequel l'espace entourant une pluralité de p tubes à l'intérieur du caisson 1 est compartimenté suivant une série de n cloisons référencées Ck, k allant de 1 à n et n≥1, il est nécessaire de ménager des moyens Mk permettant d'établir une communication Mk entre chaque volume Vk et chaque volume Vk+1 séparés par une cloison Ck. Bien entendu, ces moyens de communication Mk peuvent consister en une ou plusieurs ouvertures pratiquées dans la cloison Ck ou bien en un ou plusieurs conduits reliant le volume Vk et le volume Vk+1, ce ou ces conduits pouvant s'étendre à l'intérieur comme à l'extérieur du caisson.

De manière à ce que le liquide caloporteur parcoure toute l'étendue de l'espace Vk, les moyens de communication Mk sont disposés de manière distale par rapport aux moyens de communication Mk-1 de la cloison précédente. En effet, le liquide caloporteur arrive depuis l'espace Vk-1 dans l'espace Vk en traversant les moyens de communication Mk-1 et entre dans l'espace Vk+1 en traversant les moyens de communication Mk. Aussi, en espaçant le plus possible les moyens de communication Mk-1 et Mk, le liquide caloporteur est contraint de s'écouler suivant toute une étendue de l'espace Vk. De manière à ce que le liquide caloporteur parcourt également toute l'étendue de l'espace Vk+1, les moyens de communication Mk sont disposés de manière distale par rapport aux moyens de communication Mk+1 de la cloison suivante. On entend par la caractéristique « disposés de manière distale », le fait que les moyens de communication Mk et Mk+1 sont disposés de manière à être le plus éloignés possible les uns des autres. Plus précisément, les moyens de communication Mk sont ménagés à proximité d'une des parois du caisson ou bien sur la paroi elle-même, tandis que les moyens de communication Mk+1 et Mk-1 sont ménagés à proximité de la paroi opposée.

Tel que prévu dans le mode de réalisation représenté en figures 2 et 3, le dispositif prévoit des moyens 4 pour admettre le liquide caloporteur à l'intérieur du volume V1, et des moyens 3 pour refouler ledit liquide à l'extérieur du volume V2. Les moyens de communication M1 sont disposés de manière distale par rapport aux moyens d'admission 4 et aux moyens de refoulement 3 du liquide caloporteur. On entend par la caractéristique « disposés de manière distale », le fait que les moyens de communication M1 sont disposés de manière à être le plus éloigné possible des moyens d'admission 4 et des moyens de refoulement 3. Plus précisément, les moyens de communication M1 sont ménagés à proximité de la paroi 8c du caisson dans le cas où ils consistent en une ouverture ou bien sur la paroi elle-même dans le cas où ils consistent en un conduit, tandis que les moyens d'admission 4 et les moyens de refoulement 3 sont disposés sur la paroi 8d opposée.

Préférentiellement, le positionnement des moyens d'admission 4, des moyens de refoulement 3 et des moyens de communication M1 est choisi pour que le liquide parcoure une étendue suivant la longueur plutôt que suivant la largeur de la cloison C1.

En référence à la figure 6 relative au mode de réalisation dans lequel l'espace entourant une pluralité de p tubes à l'intérieur du caisson 1 est compartimenté suivant une série de n cloisons, le dispositif admet également des moyens 4 pour admettre le liquide caloporteur à l'intérieur du volume V1 défini par la première cloison de la série, et des moyens 3 pour refouler ledit liquide à l'extérieur du volume Vn défini par la dernière cloison de la série. Les moyens de communication M1 de la première cloison de la série sont disposés alors de manière distale par rapport aux moyens d'admission 4, de même que les moyens de communication Mn de la dernière cloison de la série sont disposés également de manière distale par rapport aux moyens de refoulement 3 du liquide caloporteur. On entend par la caractéristique « disposés de manière distale », le fait que les moyens de communication M1 et Mn sont disposés de manière à être respectivement le plus éloigné possible des moyens d'admission 4 et des moyens de refoulement 3. De manière plus précise, les moyens de communication M1 et Mn sont respectivement ménagés à proximité de la paroi du caisson opposée à la paroi à proximité de laquelle se trouvent les moyens d'admission 4 et les moyens de refoulement 3.

Ainsi, dans le cas où il y a un nombre n pair de cloisons, le liquide caloporteur parcourt n-1 allers-retours plus un aller. En revanche, dans le cas où il y a un nombre n impair de cloisons, le liquide caloporteur parcourt n allers-retours.

Préférentiellement, le positionnement des moyens d'admission 4, des moyens de refoulement 3 et des moyens de communication Mk est choisi pour que le liquide parcoure une étendue suivant la longueur plutôt que suivant la largeur de la cloison Ck.

De manière avantageuse, le dispositif comprend une seconde pluralité de tubes 7 servant de passage à des moyens de fixation dudit dispositif sur un support. Les moyens de fixation peuvent être des tirants.

Le caisson et les tubes peuvent être en acier ou bien en aluminium. Dans ce cas, le procédé de fabrication du dispositif de régulation met en oeuvre des étapes de fabrication connues de l'Homme du Métier et comportant en particulier l'approvisionnement de tubes et de six plaques, deux d'entre elles étant évidées de manière ajustée par rapport au diamètre des tubes. L'assemblage des plaques renfermant les tubes positionnés face aux évidements des plaques s'effectue préférentiellement par soudage.

Le caisson et les tubes peuvent être en élastomère ou bien en plastique, ces matériaux comprenant préférentiellement des charges destinées à améliorer les propriétés mécaniques. Le procédé de fabrication comprend alors au moins une étape de moulage.

En fonction du matériau choisi, et de manière avantageuse, la surface intérieure des tubes 2 peut être traitée entièrement ou bien partiellement de manière à être non conductrice sur le plan électrique, hautement conductrice sur le plan thermique, ou bien de manière à présenter un revêtement destiné à réduire son coefficient de frottement.

Les revêtements conférant à la surface intérieure des tubes une isolation électrique sont préférentiellement des revêtements enrobant en silicone ou bien à base de monomères d'éthylène-propylène-diène.

Les revêtements conférant à la surface intérieure des tubes un caractère thermiquement conducteur sont préférentiellement à base de gel de silicone ainsi que certaines résines.

Les revêtements conférant à la surface intérieure des tubes un caractère lubrifiant sont préférentiellement des lubrifiants solides tels que le graphite, l'oxyde de zinc, le nitrure de bore, le disulfure de molybdène, le fluorure de graphite, les sulfures d'étain, les sulfures de bismuth, ou le disulfure de tungstène, le fluorure de calcium, certains thiosulfates, le polytétrafluoréthylène ou encore certains polyamides.

Concernant maintenant l'utilisation optimale du dispositif de régulation thermique, il est nécessaire que le diamètre des tubes 2 soit au mieux ajusté avec celui des éléments électrochimiques. Ceci permet en effet un contact plus franc entre la surface latérale de l'élément électrochimique et la surface intérieure des tubes, et par voie de conséquence un échange thermique plus important. De ce fait, l'invention a également pour objet un procédé de montage d'éléments électrochimiques dans un dispositif de régulation thermique tel que décrit précédemment.

Afin d'insérer aisément les éléments électrochimiques dans les enceintes 2a du dispositif, il est conseillé de procédé à une étape conduisant à la dilatation des tubes 2.

Dans le cas où le dispositif est en acier ou bien en aluminium, on procède à la dilatation des tubes 2 en chauffant le dispositif.

Dans le cas où le dispositif est en élastomère, on procède à la dilatation des tubes 2 en mettant sous vide les espaces Vk intérieurs au caisson à une pression par exemple inférieure à la pression atmosphérique.

Une fois inséré dans le dispositif et comme représenté en figure 1, chaque élément électrochimique présentant une surface latérale, un fond et un couvercle, est en contact avec au moins 75% de sa surface latérale avec le caisson.

Concernant le type de liquides caloporteurs, il est possible d'utiliser tout type et notamment, l'eau déminéralisée particulièrement performante en termes d'échange thermique, des mélanges d'eau déminéralisée et d'éthylène glycol, des huiles minérales, des fluides diélectriques du type perfluorocarbure.

Des simulations thermo fluidiques détaillées ont été réalisées pour valider l'invention par rapport à des solutions existantes et plus particulièrement par rapport à des solutions mettant en oeuvre des dispositifs de régulation de température constitués d'une chemise d'eau rigide ("water jacket") qui comprend une enveloppe rigide dans laquelle un liquide caloporteur circule. Le liquide caloporteur est de l'eau glycolée 50/50 régulée à 20°C selon un débit de 3L/min. La puissance dissipée P par chaque élément électrochimique en régime permanent est de 38W.

| **Désignation** | **description** | |
|---|---|---|
| Water-jacket rigide | Solution en polypropylène rigide passant entre les 2 rangées d'éléments. Contact sur 20% de la surface latérale | Solution existante |
| Water-jacket souple | Solution en polyuréthane souple passant et gonflant entre les 2 rangées d'éléments. Contact sur 20% de la surface latérale | Solution existante |
| Dispositif en élastomère | Conforme à l'invention | Invention |
| Dispositif métallique | Conforme à l'invention | Invention |
| Dispositif en plastique | Conforme à l'invention | Invention |

Les résultats obtenus ont permis d'établir que le refroidissement des éléments électrochimiques était homogène (moins de 2°C d'écart entre chaque élément électrochimique) et que les pertes de charge étaient faibles (inférieures à 234 Pa).

Les résultats obtenus ont également permis d'établir la performance thermique élevée du dispositif selon l'invention puisque le coefficient d'échange thermique H est compris entre 30 W/m².K et 100 W/m².K.
Le tableau suivant résume les différentes performances thermiques des solutions existantes et des variantes de l'invention :

| **Désignation** | **Performance thermique Coefficient H (W/m².K)** | |
|---|---|---|
| Water-jacket rigide | 16,2 | Solution existante |
| Water-jacket souple | 22,8 | Solution existante |
| Dispositif en élastomère | 100 | Invention |
| Dispositif métallique | 40<H<100 (en fonction de l' optimisation) | Invention |
| Dispositif en plastique | 30<H<100 (en fonction de l' optimisation) | Invention |

La figure 4 met en évidence que les solutions existantes du type "water jacket" n'empêchent pas d'élévation de température pour un coefficient d'échange avec les éléments électrochimiques H égal à 22,8W/m².K.

La figure 5 montre en revanche que les solutions conformes à l'invention permettent de contenir l'élévation de la température avec un coefficient d'échange thermique H atteignant 100W/m².K, soit plus de quatre fois celui des solutions existantes du type "water jacket".

L'invention permet donc de maintenir les éléments électrochimiques en dessous de 40°C pour les applications de haute puissance.

Ce dispositif de régulation présente avant tout une capacité de refroidissement / réchauffement maximisée dans la mesure où le liquide caloporteur entoure la totalité de la surface latérale des éléments électrochimiques. Cette solution permet aussi d'avoir une homogénéité thermique sur l'ensemble des éléments électrochimiques du fait de l'architecture hydraulique en aller-retour. En effet, lors de son parcours, le liquide caloporteur définit un gradient de température dans tous les espaces Vk qu'il traverse en inversant le sens du gradient à chaque fois qu'il traverse une cloison. De ce fait, la somme des échanges thermiques suivant la direction définie par l'axe longitudinal des tubes est constante au niveau chaque tube, et par conséquent au niveau de chaque élément électrochimique. Ces derniers reçoivent ainsi un refroidissement / réchauffement identique.

Ce dispositif de régulation thermique présente d'autres avantages non négligeables, dans la mesure où il permet de dé-corréler le liquide caloporteur des éléments électrochimiques, le liquide caloporteur n'étant plus en contact avec la paroi de l'élément électrochimique. Les caractéristiques d'étanchéité et d'isolation électrique du dispositif permettent non seulement d'élargir les possibilités de choix de liquides caloporteurs mais également d'intégrer le dispositif dans une structure ouverte.

De par sa simplicité de forme, le montage des éléments électrochimiques dans le dispositif de régulation peut être automatisé au même titre que l'intégration du module constitué par l'assemblage du dispositif de régulation et des éléments électrochimiques, dans une chaîne de fabrication de générateurs électrochimiques.

De par le fait que le liquide caloporteur circule dans des espaces de section importante, les pertes de charge du dispositif sont minimisées et de faibles vitesses de circulation du liquide caloporteur sont autorisées.

## Revendications

1. Procédé de fabrication d'une batterie comprenant un dispositif de régulation thermique d'éléments électrochimiques,
le dispositif comportant un caisson (1) étanche aux liquides comprenant :
- une pluralité de tubes (2, 7) disposés de manière sensiblement parallèle, chacune des extrémités des tubes débouchant à l'extérieur du caisson (1),
- n cloisons Ck, n≥1 et 1≤k≤n, s'étendant transversalement à la direction définie par l'axe longitudinal des tubes de manière à compartimenter l'espace entourant la pluralité de tubes à l'intérieur du caisson suivant n+1 volumes V,
le dispositif étant pourvu de moyens Mk permettant d'établir une communication entre le volume Vk et le volume Vk+1 séparés par la cloison Ck,
- les moyens de communication Mk étant disposés de manière distale par rapport aux moyens Mk-1 de communication entre le volume Vk-1 et le volume Vk séparés par la cloison Ck-1 et par rapport aux moyens Mk+1 de communication entre le volume Vk+1 et le volume Vk+2 séparés par la cloison Ck+1,
le dispositif étant également pourvu de moyens d'admission (4) d'un liquide caloporteur à l'intérieur du volume V1 défini par la première cloison et de moyens de refoulement (3) dudit liquide à l'extérieur du volume Vn+1 défini par la dernière cloison,
les moyens de communication M1 et Mn de la première et de la dernière cloison de la série étant disposés respectivement de manière distale par rapport aux moyens d'admission (4) et au moyen de refoulement (3) du liquide caloporteur,
la batterie comprenant en outre des éléments électrochimiques logés dans les tubes (2) du dispositif de régulation thermique, lesdits éléments électrochimiques étant isolés électriquement vis-à-vis desdits tubes, et
dans lequel le procédé comprend au moins une étape de montage des éléments électrochimiques dans les tubes (2) du dispositif de régulation, cette étape comprenant la dilatation des tubes (2).

2. Procédé de fabrication selon la revendication 1, **caractérisé en ce que** les tubes sont répartis selon au moins une rangée comprenant au moins deux tubes.

3. Procédé de fabrication selon l'une quelconque des revendications précédentes, **caractérisé en ce que** les moyens Mk permettant d'établir une communication entre le volume Vk et le volume Vk+1 sont constitués d'une ou plusieurs ouvertures pratiquées dans la cloison Ck .

4. Procédé de fabrication selon l'une quelconque des revendications 1 ou 2, **caractérisé en ce que** les moyens Mk permettant d'établir une communication entre le volume Vk et le volume Vk+1 sont constitués d'un ou plusieurs conduits disposés à l'extérieur du caisson.

5. Procédé de fabrication selon l'une quelconque des revendications 1 ou 2, **caractérisé en ce que** les moyens Mk permettant d'établir une communication entre le volume Vk et le volume Vk+1 sont constitués d'une ou plusieurs ouvertures pratiquées dans la cloison Ck ainsi que d'un ou plusieurs conduits disposés à l'extérieur du caisson.

6. Procédé de fabrication selon l'une quelconque des revendications précédentes, **caractérisé en ce que** la section des tubes est circulaire ou rectangulaire.

7. Procédé de fabrication selon l'une quelconque des revendications précédentes, **caractérisé en ce que** le caisson et les tubes du dispositif sont en acier ou en aluminium.

8. Procédé de fabrication selon l'une quelconque des revendications précédentes, **caractérisé en ce que** le caisson et les tubes du dispositif sont en élastomère ou en plastique, ledit élastomère ou plastique comportant préférentiellement des charges.

9. Procédé de fabrication selon l'une quelconque des revendications précédentes, **caractérisé en ce que** la surface intérieure des tubes (2) est tout ou partie traitée de manière à être non conductrice sur le plan électrique et/ou hautement conductrice sur le plan thermique et/ou de manière à présenter un revêtement destiné à réduire son coefficient de frottement.

10. Procédé de fabrication selon l'une quelconque des revendications précédentes, **caractérisé en ce qu'**une partie des tubes (7) est adaptée au passage de moyens de fixation dudit dispositif sur un support.

11. Procédé de fabrication selon l'une quelconque des revendications précédentes, dans laquelle chaque élément électrochimique présente une surface latérale, un fond et un couvercle, au moins 75% de la surface latérale étant en contact avec le caisson, préférentiellement au moins 90%, encore plus préférentiellement 100%.

12. Procédé de fabrication d'une batterie selon la revendication 1, **caractérisé en ce que** la dilatation des tubes (2) est réalisée par chauffage du dispositif et en particulier des tubes, ledit dispositif étant en acier ou bien en aluminium

13. Procédé de fabrication d'une batterie selon la revendication 12, **caractérisé en ce que** la dilatation des tubes (2) est réalisée par la mise sous vide des espaces intérieurs au caisson, ledit dispositif étant en élastomère.

## Patentansprüche

1. Verfahren zur Herstellung von einer Batterie, die eine Vorrichtung zur Wärmeregulierung der elektrischen Elemente aufweist,
wobei die Vorrichtung einen flüssigkeitsdichten Kasten (1) aufweist, umfassend:
- mehrere Rohre (2, 7), die im Wesentlichen parallel angeordnet sind, wobei jedes der Enden der Rohre an der Außenseite des Kastens (1) mündet,
- n Trennwände Ck, n ≥ 1 und 1 ≤ k ≤ n, die sich quer zu der Richtung, die von der Längsachse der Rohre definiert ist, derart erstrecken, um den Raum, der die mehreren Rohre im Inneren des Kastens umgibt, nach n+1 Volumen V zu unterteilen,
wobei die Vorrichtung mit Mitteln Mk versehen ist, die ermöglichen, eine Verbindung zwischen dem Volumen Vk und dem Volumen Vk+1 zu erstellen, die durch die Trennwand Ck getrennt sind,
- wobei die Verbindungsmittel Mk distal in Bezug auf die Mittel MK-1 zum Verbinden zwischen dem Volumen Vk-1 und dem Volumen Vk, die durch die Trennwand Ck-1 getrennt sind, und in Bezug auf die Mittel Mk+1 zum Verbinden zwischen dem Volumen Vk+1 und dem Volumen Vk+2, die durch die Trennwand Ck+1 getrennt sind, angeordnet sind,
wobei die Vorrichtung ebenfalls mit Mitteln zum Einlassen (4) einer Wärmeträgerflüssigkeit ins Innere des Volumens V1, das durch die erste Trennwand definiert ist, und Mittel zum Auslassen (3) der Flüssigkeit außerhalb des definierten Volumens Vn+1 versehen ist, das von der letzten Trennwand definiert ist,
wobei die Verbindungsmittel M1 und Mn der ersten und der zweiten Trennwand der Serie jeweils distal in Bezug auf die Mittel zum Einlassen (4) und die Mittel zum Auslassen (3) der Wärmeträgerflüssigkeit angeordnet sind,
wobei die Batterie ferner elektrochemische Elemente aufweist, die in den Rohren (2) der Vorrichtung zur Wärmeregulierung untergebracht sind, wobei die elektrochemischen Elemente gegenüber den Rohren elektrisch isoliert sind, und
wobei das Verfahren mindestens einen Schritt der Montage der elektrochemischen Elemente in den Rohren (2) der Vorrichtung zur Regulierung aufweist, wobei dieser Schritt das Ausdehnen der Rohre (2) aufweist.

2. Verfahren zur Herstellung nach Anspruch 1, **dadurch gekennzeichnet, dass** die Rohre mindestens in einer Reihe angeordnet sind, die mindestens zwei Rohre aufweist.

3. Verfahren zur Herstellung nach einem der vorhergehenden Ansprüche, **dadurch gekennzeichnet, dass** die Mittel Mk, die ermöglichen, eine Verbindung zwischen dem Volumen Vk und dem Volumen Vk+1 zu erstellen, aus einer oder mehreren Öffnungen gebildet sind, die in der Trennwand Ck ausgebildet sind.

4. Verfahren zur Herstellung nach einem der Ansprüche 1 oder 2, **dadurch gekennzeichnet, dass** die Mittel Mk, die ermöglichen, eine Verbindung zwischen dem Volumen Vk und dem Volumen Vk+1 zu erstellen, aus einer oder mehreren Leitungen gebildet sind, die im Inneren des Kastens angeordnet sind.

5. Verfahren zur Herstellung nach einem der Ansprüche 1 oder 2, **dadurch gekennzeichnet, dass** die Mittel Mk, die ermöglichen, eine Verbindung zwischen dem Volumen Vk und dem Volumen Vk+1 zu erstellen, aus einer oder mehreren Öffnungen, die in der Trennwand Ck ausgebildet sind, und aus einer oder mehreren Leitungen gebildet sind, die im Inneren des Kastens angeordnet sind.

6. Verfahren zur Herstellung nach einem der vorhergehenden Ansprüche, **dadurch gekennzeichnet, dass** der Querschnitt der Rohre kreisförmig oder rechteckig ist.

7. Verfahren zur Herstellung nach einem der vorhergehenden Ansprüche, **dadurch gekennzeichnet, dass** der Kasten und die Rohre der Vorrichtung aus Stahl oder aus Aluminium sind.

8. Verfahren zur Herstellung nach einem der vorhergehenden Ansprüche, **dadurch gekennzeichnet, dass** der Kasten und die Rohre der Vorrichtung aus Elastomer oder aus Kunststoff sind, wobei das Elastomer oder der Kunststoff vorzugsweise Füllstoffe umfasst.

9. Verfahren zur Herstellung nach einem der vorhergehenden Ansprüche, **dadurch gekennzeichnet, dass** die Innenfläche der Rohre (2) vollständig oder teilweise derart behandelt ist, um elektrisch nicht leitfähig und/oder thermisch hoch leitfähig zu sein und/oder um eine Beschichtung aufzuweisen, die dazu bestimmt ist, ihren Reibungskoeffizienten zu verringern.

10. Verfahren zur Herstellung nach einem der vorhergehenden Ansprüche, **dadurch gekennzeichnet, dass** ein Teil der Rohre (7) für den Durchgang von Befestigungsmitteln der Vorrichtung auf einem Träger geeignet ist.

11. Verfahren zur Herstellung nach einem der vorhergehenden Ansprüche, **dadurch gekennzeichnet, dass** jedes elektrochemische Element eine Seitenfläche, einen Boden und einen Deckel aufweist, wobei mindestens 75 % der Seitenfläche, vorzugsweise mindestens 90 %, insbesondere 100 % mit dem Kasten in Kontakt sind.

12. Verfahren zur Herstellung einer Batterie nach Anspruch 1, **dadurch gekennzeichnet, dass** das Ausdehnen der Rohre (2) durch Erhitzen der Vorrichtung und insbesondere der Rohre durchgeführt wird, wobei die Vorrichtung aus Stahl oder aus Aluminium besteht.

13. Verfahren zur Herstellung einer Batterie nach Anspruch 12, **dadurch gekennzeichnet, dass** das Ausdehnen der Rohre (2) durch unter Vakuum setzen der Innenräume des Kastens durchgeführt wird, wobei die Vorrichtung aus Elastomer besteht.

## Claims

1. A method for manufacturing a battery comprising a thermal control device for electrochemical cells,
the device comprising a fluid-tight casing (1) comprising:
- a plurality of tubes (2, 7) arranged substantially parallel to each other, each of the ends of the tubes emerging outside of the casing (1),
- n partitions Ck, in which n≥1 and 1≤k≤n, extending transversely to the direction defined by the longitudinal axis of the tubes so as to compartmentalize a space surrounding the plurality of tubes within the casing into n+1 volumes V,
the device being provided with communication means Mk for establishing communication between a volume Vk and a volume Vk + 1, said volumes being separated by a partition Ck,
- in which communication means Mk are disposed distally with respect to communication means Mk-1 for establishing communication between a volume Vk-1 and the volume Vk separated by a partition Ck-1, and distally with respect to communication means Mk + 1 for providing communication between a volume Vk+1 and a volume Vk + 2 separated by the partition Ck + 1,
said device also having inlet means (4) for entry of a heat transfer fluid into the volume V1 defined by the first partition, and outlet means (3) for discharging said fluid outside of the volume Vn + 1 defined by a last partition,
the communication means M1 and Mn of a first and last partition of the series of partitions being disposed distally respectively with respect to the inlet means (4) and with respect to the outlet means (3) for the heat transfer fluid,
the battery further comprising electrochemical cells housed inside the tubes (2) of the thermal control device, said electrochemical cells being electrically insulated with respect to said tubes, and
wherein the method includes at least a step of mounting the electrochemical cells into the tubes (2) of the thermal control device, said step including the step of expanding the tubes (2).

2. The method for manufacturing of claim 1, **characterized in that** the tubes are distributed in at least one row comprising at least two tubes.

3. The method for manufacturing according to any one of the preceding claims, **characterized in that** the means Mk for establishing communication between a volume Vk and a volume Vk + 1 are comprised of one or more openings in a partition Ck.

4. The method for manufacturing according to any one of claims 1 or 2, **characterized in that** the means Mk for establishing communication between a volume Vk and a volume Vk + 1 are comprised of one or more conduits arranged outside the casing.

5. The method for manufacturing according to any one of claims 1 or 2, **characterized in that** the means Mk for establishing communication between a volume Vk and a volume Vk + 1 are comprised of one or more openings in a partition Ck as well as one or more conduits arranged outside the casing.

6. The method for manufacturing according to any one of the preceding claims, **characterized in that** the tube cross-section is circular or rectangular.

7. The method for manufacturing according to any one of the preceding claims, **characterized in that** the casing and the tubes of the device are made of steel or aluminum.

8. The method for manufacturing according to any one of the preceding claims, **characterized in that** the casing and the tubes of the device are made of elastomer or plastics material, said elastomer or plastics material preferably comprising fillers.

9. The method for manufacturing according to any one of the preceding claims, **characterized in that** the inner surface of the tubes (2) is treated all or in part in order to be non-conductive electrically and/or highly conductive thermally and/or so as to have a coating which reduces its coefficient of friction.

10. The method for manufacturing according to any one of the preceding claims, **characterized in that** certain ones of said plurality of tubes (7) are adapted for the passage of means for securing said device onto a support.

11. The method for manufacturing according to any preceding claim, wherein each electrochemical cell has a lateral surface, a bottom and a cover, at least 75% of said lateral surface being in contact with the casing, preferably at least 90%, even more preferably 100%.

12. The method of manufacturing a battery according to claim 1, **characterized in that** the expansion of the tubes (2) is performed by heating said device, and in particular said tubes, said device being of steel or of aluminum.

13. The method of manufacturing a battery according to claim 12, **characterized in that** the expansion of the tubes (2) is performed by evacuating air from spaces inside of said casing, said device being of elastomer material.
